# EUROPEAN PATENT APPLICATION

(11) **EP 1 608 127 A1**
(43) Date of publication of application: **21.12.2005**
(21) Application number: 05105168.8
(22) Date of filing: 13.06.2005
(51) Int. Cl.: H04L 29/06, H04L 29/08, H04M 7/00

(54) **VoIP network, media Proxy Server, and method of providing additional services used in them**

(30) Priority: 16.06.2004 JP 2004177697
(71) Applicant: NEC CORPORATION, Tokyo (JP)
(72) Inventor: Fukui, Keiji, Tokyo (JP)
(74) Representative: Esslinger, Alexander

(57) **Abstract**

A VoIP network in which the user of a device can activate any addition service, without thinking of the device to which his or her device should be connected VoIP media packets are transmitted between a network (A) that can provide additional VoIP services and a network (B) that cannot provide additional VoIP services, through a VoIP media proxy server. When any additional service is activated in the network(A), the VoIP media proxy server generates a service media packet and transmits this packet to the network (B).

## Description

### BACKGROUND OF THE INVENTION

### 1. Field of the Invention

The present invention relates to a VoIP (Voice over Internet Protocol) network, a media proxy server, and a method of providing additional services used in them, and more particularly, to a method of providing additional services in the VoIP network.

### 2. Description of the Related Art

VoIP apparatuses, which are identical in specification and function, may be used to constitute a VoIP network. In this case, all the VoIP apparatuses provide services in the same procedure and have the same service-providing ability. Therefore, the service-providing ability of each VoIP device can be fully utilized in the entire network.

However, VoIP devices available at present, such as IP (Internet Protocol) telephones, IP gateway devices, and the like, differ from one another in specifications because they are made by various manufacturers Consequently, they are not unified in function of providing services.

When the user activates an additional service, such as call holding or call transfer, he or she usually cannot know the functions of the VoIP device to which his or her device should be connected. Hence, if the VoIP device to be connected has no function of providing any additional services, there is no other way than to restrict the services or to restrict the connection so that the services may not be activated.

All VoIP devices connected by a network need to perform a procedure of providing all additional services that are used in the network. Among the service-providing procedures for use in the network is a procedure achieved by using, for example, SIP (Session Initiation Protocol) (See, for example, A. Johnston, et al. "Session Initiation Protocol service Examples draft-ietf-sipping-service- examples-06 2 1 Call Hold," Expires, August 15, 2004, pp 4-16).

With the system described above, it is possible to provide additional services in the entire network since the all VoIP devices on the network perform the procedure of providing additional services. However, new services must be added, or the network must be updated for all VoIP devices at the same time. This requires a very high cost and an extremely long time. Practically, new services cannot be added, or the network cannot be updated.

In a network constituted by the standard protocol, a long time elapses until the service-providing procedures are unified in terms of specification, or any additional services cannot be fully provided between the VoIP devices that differ in specification because their service-providing procedures are not unified.

A method of providing additional services has been proposed (see, for example, JP-A-2000-228680). This method solves the problem resulting from the fact that the VoIP devices perform additional-service-providing procedures of different versions, if all additional-service-providing procedures employed in the network are, for example, procedures H. 323 that are recommended by ITU-T (International Telecommunication Union-Telecommunication Standardization Sector).

In the conventional VoIP network described above, which is constituted by VoIP devices of different types, the basic communication, i.e., one-to-one talk, can be achieved. However, additional services, such as call holding and call transfer, cannot be provided because the VoIP devices, which are made by different manufacturers or differ from one another in specification This holds true in the case where one VoIP device can provide additional services, but the other device connected to the first-mentioned VoIP device cannot provide additional services. This problem cannot be solved by the method disclosed in JP-A-2000-228680.

### SUMMARY OF THE INVENTION

An object of this invention is to provide a VoIP network, a media proxy server, and a method of providing additional services for use in the network and server, which solve the problem described above. In the VoIP network, media proxy server and the method, the user of a device can activate any additional service, without the necessity of considering the device to which his or her device should be connected.

According to the present invention, there is provided a VoIP network comprising: a plurality of VoIP devices; and a media proxy server connected to the plurality of VoIP devices.. The plurality of VoIP devices include a first VoIP device that can provide an additional service using VoIP communication and a second VoIP device that cannot provide the additional service. In the VoIP network, when an additional service is activated in the first VoIP device, the media proxy server generates a service media packet corresponding to the additional service and transmits the service media packet to the second VoIP device that uses the additional service.

According to the present invention, there is provided a media proxy server for use in a VoIP network comprising a plurality of VoIP devices including a first VoIP device that can provide an additional service using VoIP communication and a second VoIP device that cannot provide the additional service. The media proxy server comprises means for generating, when an additional service is activated in the first VoIP device, a service media packet corresponding to the additional service; and means for transmitting the service media packet to the second VoIP device that uses the additional service.

According to the present invention, there is provided method of providing additional services for use in a VoIP network comprising comprising a plurality of VoIP devices and a media proxy server connected to the plurality of VoIP devices. The plurality of VoIP devices include a first VoIP device that can provide an additional service using VoIP communication and a second VoIP device that cannot provide the additional service. The method comprises a step in which the media proxy server generates, when an additional service is activated in a VoIP device, a service media packet corresponding to the additional service; and a step in which the media proxy server transmits the service media packet to the second VoIP device that uses the additional service.

That is, the VoIP network according to this invention is characterized in that a VoIP media packet is transferred via the media proxy server, the media proxy server generates a service media packet when an additional service is activated in a VoIP device, and the service media packet thus generated is transmitted to another VoIP device.

In the VoIP network according to this invention, the VoIP media proxy server is provided on the transfer path of service media packets. A call-holding tone or a media path can therefore be switched without using an additional-service procedure signal . Thus, the user can activate any additional service, without necessity of considering the device to which his or her device should be connected

According to the present invention, there is provided an advantage that the user can activate any additional service without necessity of considering the device to which his or her device should be connected, by the configuration and operation to be described below

### BRIEF DESCRIPTION OF THE DRAWINGS

In the accompanying drawings:
FIG. 1 is a block diagram illustrating the configuration of a VoIP network according to an embodiment of the present invention;
FIG. 2 is a block diagram depicting the configuration of the VMD-proxy that is shown in FIG. 1;
FIG. 3 is a media-conversion table used in the embodiment of this invention;
FIG. 4 is a sequence chart illustrating the operation in the VoIP network according to the embodiment of the invention;
FIG. 5 is another sequence chart explaining the operation in the VoIP network according to the embodiment of this invention;
FIG. 6 is still another sequence chart illustrating the operation in the VoIP network according to the embodiment of this invention;
FIG. 7 is a block diagram depicting the configuration of the VMD-proxy provided in another embodiment of the present invention;
FIG. 8 is a sequence chart explaining the operation in the VoIP network according to the other embodiment of the invention;
FIG 9 is another sequence chart explaining the operation in the VoIP network according to the other embodiment of this invention; and
FIG. 10 is still another sequence chart illustrating the operation in the VoIP network according to the other embodiment of the present invention

### DETAILED DESCRIPTION OF THE PREFERRED EMBODIMENTS

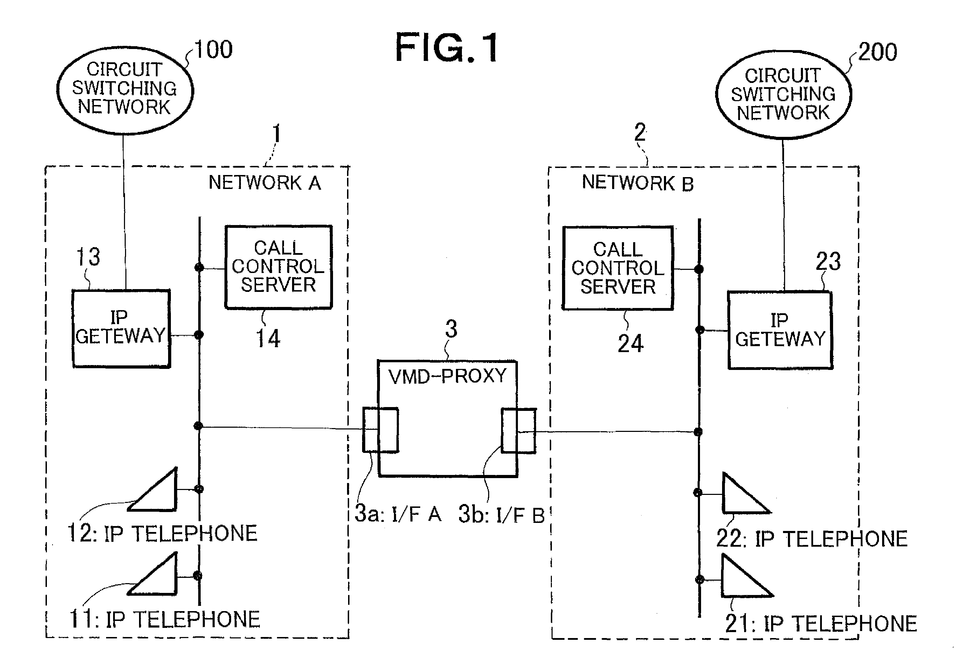

Embodiments of this invention will be described, with reference to the accompanying drawings. FIG. 1 is a block diagram that shows the configuration of a VoIP network according to an embodiment of the present invention As FIG. 1 shows, the VoIP network according this embodiment comprises a network(A) 1, a network(B) 2, and a VoIP media proxy server 3 (hereinafter referred to as "VMD-proxy"). The VMD-proxy 3 comprises an interface controller (I/F A) 3a and an interface controller (I/F B) 3b. Both networks (A) 1 and (B) 2 are VoIP networks.

The network(A) 1 comprises IP (Internet Protocol) telephones 11 and 12, an IP gateway device 13, and a call control server 14. The IP telephones 11 and 12, IP gateway device 13 and call control server 14 have IP addresses that are unique in the network(A) 1. The call control server 14 controls the IP telephones 11 and 12 and the IP gateway device 13, thus providing VoIP services in the network(A) 1.

The IP telephones 11 and 12 are telephones that can convert sound to an IP packet and an IP packet to sound The IP gateway device 13 can accomplish mutual connection between the circuit switching network 100, such as a private network or the public network, and the network(A) 1 Like the IP telephones 11 and 12, the IP gateway device 13 has the function of converting sound to an IP packet and an IP packet to sound..

The call control server 14 controls not only the basic call-connection at the VoIP devices (i.e., IP telephones 11 and 12 and IP gateway device 13) but also the additional VoIP services in the network (A) 1, such as call holding and call transfer. The VoIP devices each have a function of providing the additional VoIP services.

Like the network(A) 1, the network(B) 2 comprises IP telephones 21 and 22, an IP gateway device 23, and a call control server 24. The IP gateway device 23 is connected to a circuit switching network 200 In this network(B) 2, the VoIP basic connection can be achieved, but no additional VoIP services can be provided.. Therefore, calls can be neither held nor transferred in the network(B) 2.

In this embodiment, the interface controller (I/F A) 3a and interface controller (I/F B) 3b are used to connect the VMD-proxy 3 to the network (A) 1 and network (B) 2. Even in the connection with the network (B) 2 with no function of providing additional services, VoIP additional services, such as call holding and call transfer, can therefore be activated at the IP telephones 11 and 12 provided in the network(A) 1. Thus, any device provided in the network (A) 1 can activate and provide additional VoIP services to whichever device connected to it.

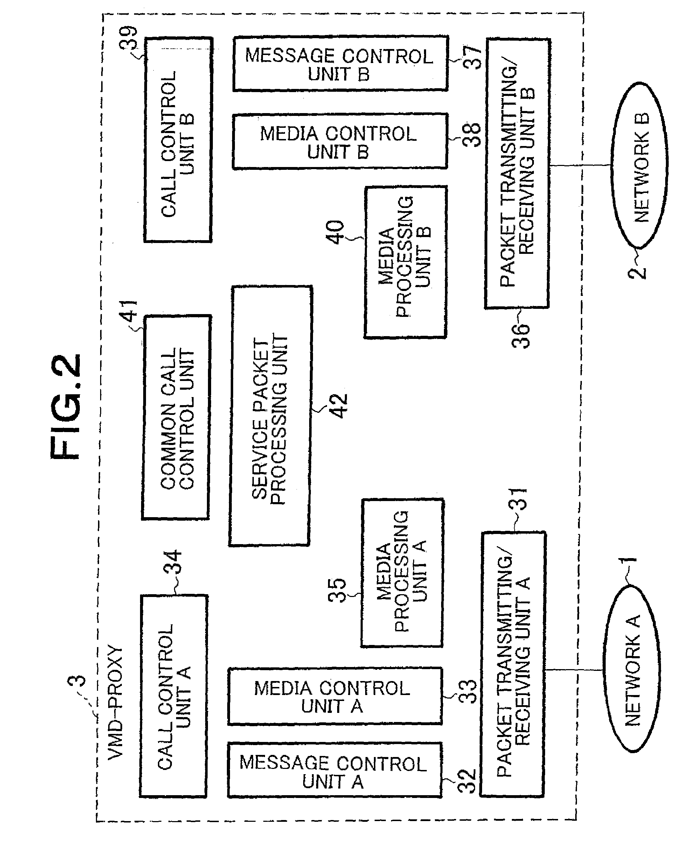

FIG. 2 is a block diagram depicting the configuration of the VMD-proxy 3 shown in FIG 1. As FIG. 2 shows, the VMD-proxy 3 comprises a packet transmitting/receiving unit (A) 31, a message control unit(A) 32, a media control unit(A) 33, a call control unit(A) 34, a media processing unit(A) 35, a packet transmitting/receiving unit (B) 36, a message control unit (B) 37, a media control unit(B) 38, a call control unit(B) 39, a media processing unit (B) 40, a common call control unit 41, and a service packet processing unit 42. The components 31 to 42 are intra-device processing modules

The packet transmitting/receiving unit (A) 31 and the packet transmitting/receiving unit (B) 36 transmit and receive packets. The message control unit(A) 32 and the message control unit(B) 37 perform message control related to a call connection.. The media control unit. (A) 3.3 and the media control unit (B) 38 perform message control related to a media path. They are controlled by the call control unit (A) 34 and the call control unit(B) 39, respectively, which are higher modules to them.

The media processing unit(A) 35 and the media processing unit(B) 40 receive instructions from the media control unit(A) 33 and the media control unit(B) 38, respectively In accordance with the instructions, the media processing unit (A) 35 and media processing unit(B) 40 receive and transmit a media packet and rewrite the header information contained in the media packet.

The common call control unit 41 transfers call control messages between the call control unit (A) 34 and the call control unit(B) 39. In accordance with the instructions given by the media control unit(A) 33 and media control unit(B) 38, the service packet processing unit 42 generates an additional-service media packet for use in additional VoIP services. The additional-service media packet includes various tones such as PB (Push Button) tones and call-holding tones. The additional-service media packet is transmitted to the media processing unit (A) 35 and media processing unit(B) 40 .

The media processing unit(A) 35 and media processing unit(B) 40 can exchange media packets The media processing unit (A) 35 and media processing unit (B) 40 can transmit the media packet received from the service packet processing unit 42, to the packet transmitting/receiving unit(A) 31 and the packet transmitting/receiving unit(B) 36, respectively.

Whether the media processing unit(A) 35 and media processing unit(B) 40 transmit the media packets they have generated, or the additional-service media packets supplied from the service packet processing unit 42, is determined from the instructions given by the media control unit(A) 33 and media control unit (B) 38.

The intra-device processing modules, namely packet transmitting/receiving unit(A) 31, message control unit(A) 32, media control unit(A) 33, call control unit(A) 34, media processing unit (A) 35, packet transmitting/receiving unit (B) 36, message control unit (B) 37, media control unit(B) 38, call control unit(B) 39 and media processing unit(B) 40, can operate independently of one another.

Assume that a database (not shown) is registered in the call control server 14. The database is connected to the VMD-proxy 3 and stores the phone number of the IP telephone 21.. Also assume that the call message and response message contain the media information about the IP telephone (i.e , IP address, media-receiving port number and codec data), which is necessary to achieve VoIP communication.

When the user of the IP telephone 11 dials the phone number of the IP telephone 21, the call control server 14 analyzes the received number from the database and transmits the call message to the VMD-proxy 3. On receiving the call message, the VMD-proxy 3 transmits the call message to the call control server 24. The call control server 24 makes a call to the IP telephone 21.

When the IP telephone 21 makes a response, the call control server 24 sends a response message to the VMD-proxy 3. The VMD-proxy 3 transmits the response message to the call control server 14. The call control server 14 informs the IP telephone 11 that the IP telephone 21 has responded. Thus, a mutual call is established between the IP telephone 11 and the IP telephone 21.

In this embodiment, the media information about the IP telephone 11, which is contained in the call message received from the call control server 14, is rewritten to the media information about the VMD-proxy 3. Similarly, the media information about the IP telephone 21, which is contained in the response message received from the call control server 24, is rewritten to the media information of the VMD-proxy 3. A media packet can therefore be transmitted via the VMD-proxy 3. The media packet is freely controlled via the VMD-proxy 3, thereby providing additional VoIP services.

The VMD-proxy 3 saves the media information about the IP telephone 11, which is contained in the call message. The VMD-proxy 3 then sets the information about it in the call message to be transmitted to the network (B) 2.. This information will be used in the media path to the network(B) 2. The VMD-proxy 3 transmits the call message to the call control server 24. The call control server 24 recognizes the call message as a message transmitted from the VMD-proxy 3 that is a VoIP device provided in the network (B) 2 The information about the VMD-proxy 3 may be the IP address, media-receiving port number and codec data of the interface controller (I/F B).

Upon receipt of the response from the IP telephone 21, the call control server 24 transmits a response message to the VMD-proxy 3. This response message contains the media information about the IP telephone 21. The response message instructs the IP telephone 21 on the establishment of a media path to the VMD-proxy 3.. As a result, a media path is established between the IP telephone 21 and the VMD-proxy 3 The media information about the IP telephone 21 may be the IP address, media-receiving port number and codec data of the IP telephone 21.

Upon receiving the response message from the call control server 24, the VDM-proxy 3 saves the media information about the IP telephone 21, which is contained in the response message.. The VDM-proxy 3 then transmits a response message to the call control server 14. The response message contains the information about the VMD-proxy 3 to be used in the media path on the network (A) 1. The information about the VMD-proxy 3 may be the IP address, media-receiving port number and codec data of the interface controller (I/F A) 3a.

The call control server 14 informs the IP telephone 11 that the media path is connected to the VMD-pxoxy 3.. Thus, the call control server 14 establishes a media path between the IP telephone 11 and the VMD-proxy 3.

The VMD-pxoxy 3 internally connects the media path connected to the IP telephone 11, to the media path connected to the IP telephone 21. Thus, the media packet received from one network are transferred to the other network, and vice versa . At this time, VoIP communication can be accomplished since the IP telephone 11, VMD-pxoxy 3 and IP telephone 21 have been connected to one another.

In the VMD-pxoxy 3, only the header part of the media packet is rewritten, maintaining the audio part thereof unchanged. The packet is then transmitted at high speed, achieving VoIP communication, without degrading the quality of sound.

Of the additional-service-providing procedures, the procedure of call holding and call transfer will be outlined. First, it will be described how the IP telephone 11 transfers the call made to the IP telephone 21, to the IP telephone 12, while a one-to-one talk is undergoing between the IP telephones 11 and 21 via the VMD-proxy 3, ultimately achieving a one-to-one talk between the IP telephone 12 and the IP telephone 21..

In this case, the call control server 14 determines that a call holding has been activated, when the user of the IP telephone 11 pushes the transfer button (not shown) provided on the IP telephone 11. The call control server 14 instructs the VDM-proxy 3, which is connected to the IP telephone 11, to disconnect the media path from the IP telephone 11.

So instructed, the VMD-proxy 3 disconnect the media path from the network(A) 1. Then, the VMD-proxy 3 generates a call-holding tone media packet and transmits this packet, in place of the media packet received from the network (A) 1, to the media path that connects the IP telephone 21 to the network(B) 2.

At this time, the RTP (Realtime Transport Protocol) header of the call-holding tone media packet contains information, such as a sequence number, which links the packet to the data contained in the media packet received from the network(A) 1. At the time the media packet received from the network(A) 1 is transmitted, this media packet contains an RTP header that contains information such as a sequence number.

The IP telephone 21 reproduces the call-holding tone media packet received from the VMD-proxy 3, acquiring the call-holding tone. The IP telephone 21 generates the call-holding tone only, when it reproduces the audio data contained in the media packet. In this case, the IP telephone 21 receives the audio data from the IP telephone 11 and generates the call-holding tone instead of the audio data.

Next, the user of the IP telephone 11 dials the telephone number of the IP telephone 12 so that the call may be transferred to the IP telephone 12. The call control server 14 causes the IP telephone 12 to receive the call. At the same time, it instructs the VMD-proxy 3 to switch the connection of the media path, connecting the media path to the IP telephone 12..

Upon receipt, of the path-switching instruction, the VMD-proxy 3 connects the media path to the IP telephone 12 and stops generating the call-holding tone media packet and stops transmitting this media packet to the IP telephone 21 provided in the network (B) 2 The VMD-proxy 3 then connects the new media path to the IP telephone 12, to the media path that is connected to the IP telephone 21.

After the call has been transferred, the connection of the media path is changed; the path connects the IP telephone 12 to the VMD-proxy 3. Thus, VoIP communication can be carried out.

The procedure of providing additional VoIP services, which is performed between the IP telephone 11, IP telephone 12, VMD-proxy 3 and call control server 14, is carried out in the network (A) 1 only. Hence, no procedure of providing additional VoIP services is effected between the VoIP devices provided in the network(B) 2 (i.e., IP telephone 21 and call control server 24) Although the destination of the call has changed from the IP telephone 11 to the IP telephone 12, the IP telephone 21 remains connected to the VMD-proxy 3

The data contained in the media packet that the IP telephone has received changed from the audio data generated in the IP telephone 11 to the call-holding data generated in the VMD-proxy 3, and then to the audio data generated in the IP telephone 12. Thus, in the network(B) 2 that has no procedure of providing additional VoIP services, the end-to-end media path can be switched, preserving the one-to-one t.alk. The user does not know that the additional service has been activated.

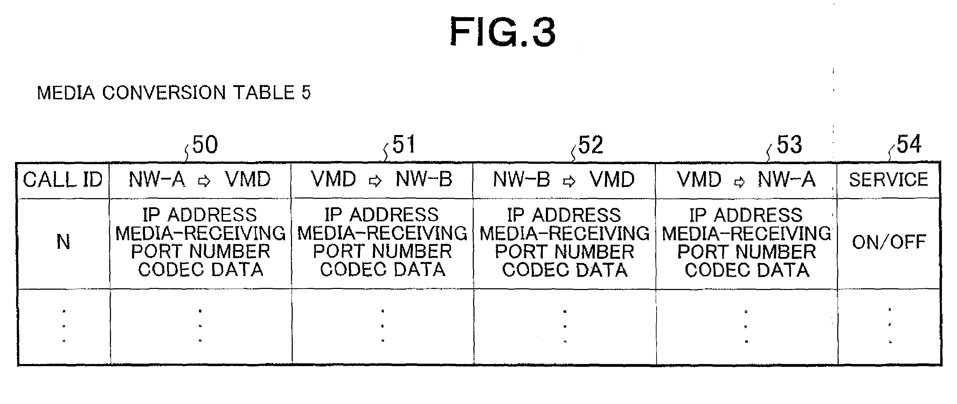

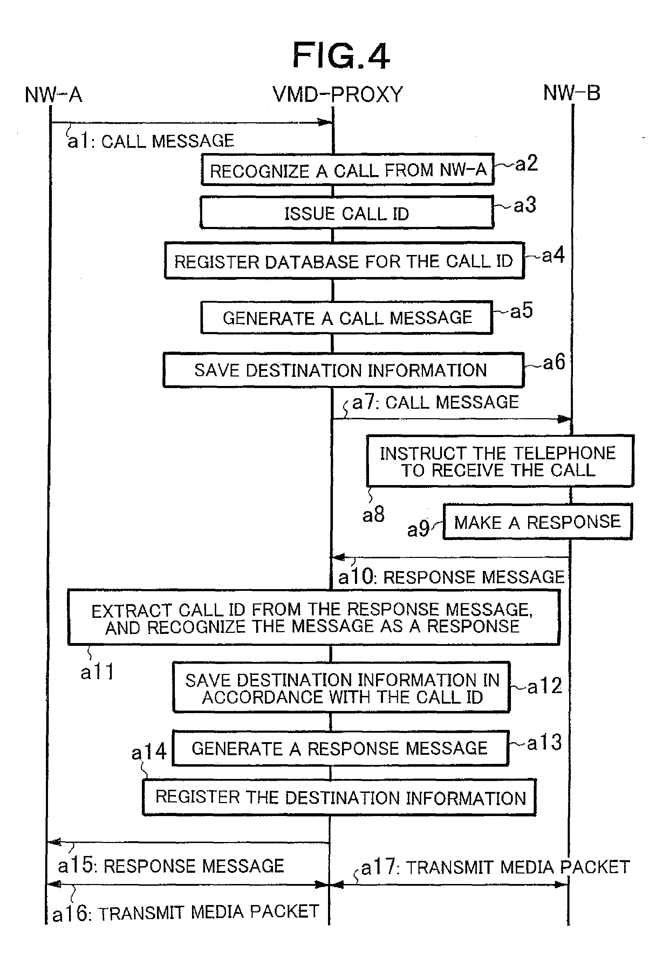

FIG. 3 is a media-conversion table used in an embodiment of this invention. FIGS. 4 to 6 are sequence charts that illustrate the operation in the VoIP network according to the embodiment of the invention. With reference to FIGS 1 to 6, it will first be explained how the processes are carried out in the VMD-proxy 3 to perform the basic call connection, and then how the call holding and call transfer are carried out as additional VoIP services In the following explanation, the network(A) 1 will be referred to as NW-A1, and the network(B) 2 as NW-B2.

The call message is transmitted from the NW-A1 to the VMD-proxy 3 (al, FIG. 4). In the VMD-proxy 3, the packet transmitting/receiving unit(A) 31 receives the call message, which is sent to the message control unit(A) 32.

The message control unit(A) 32 sends the call message to the call control unit(A) 34. The call control unit(A) 34 recognizes that the VMD-proxy 3 has received a call from the NW-A1 (a2, FIG. 4). The call control unit(A) 34 issues a call ID as new call information (a3, FIG. 4) Thereafter, the call ID controls and manages the call connection

The call message received contains the media information (i.e., IP address, media-receiving port number and codec data) about the IP telephone 11 to which the call should be transmitted. The call control unit (A) 34 transfers the information about the IP telephone 11 to the media control unit (A) 33, together with the call ID information.

In the media control unit(A) 33, a database for the call ID is registered in a media conversion table 5 shown in FIG. 3 (a4, FIG. 4)

The media conversion table 5 consists of four fields 50 to 53. The field 50 pertains to the direction of "NW-A to VMD-proxy" , the field 51 to the direction of "VMD-proxy to NW-B," the field 52 to the direction of "NW-B to VMD-proxy", and the field 53 to the direction of "VMD-proxy to NW-A".

Each of the fields 50 to 53 contains the IP address, media-receiving port number and codec data of the destination. The field also contains parameters, which may be used to retrieve the call ID.

The media information about the IP telephone 11, which has been received, is registered, as destination information, in the field 53 of the media conversion table 5, which pertains to the direction of "VMD-proxy to NW-A".

The call control unit(A) 34 transfers the call message to the common call control unit 41, together with the call ID information. The common call control unit 41 generates a call message to be sent to the NW-B2 (a5, FIG. 4) The call message is transferred to the call control unit(B) 39, together with the call ID information.

The call control unit (B) 39 recognizes that the call should be sent to the NW-B2. The call control unit(B) 39 incorporates the information about the MD-proxy 3 to be used in the media path to the NW-B2 into the call message and transfers the call message to the message control unit(B) 37. The call control unit(B) 39 transfers the media information about the VMD-pxoxy 3, which will be used in the media path set in the call message, to the media control unit(B) 38, along with call ID In this case, the call ID information is identical to the call ID issued at the call control unit(A) 34.. Here, the VDM-proxy information may be the IP address, media-receiving port number and codec data of the interface controller (I/F B) 3b.

The media control unit(B) 38 receives the media path information and saves this information, as destination information, in the field 52 of the media conversion table 5, which pertains to the direction of "NW-B to VMD-proxy" (a6, FIG. 4). The message control unit(B) 37 receives the call messages and transmits this message to the NW-B2 through the packet transmitting/receiving unit (B) 3& (a7, FIG. 4).

In the NW-B2, the call control server 24 instructs the IP telephone 21 to receive the call (a8, FIG. 4). So instructed, the IP telephone 21 recognizes that a call from the VMD-proxy 3 has arrived and then makes a response (a9, FIG. 4) Then, the IP telephone 21 sends a response message to the VMD-proxy 3 via the call control server 24 (a10, FIG. 4) The response message contains the IP address, media-receiving port number and codec data of the IP telephone 21..

In the VMD-proxy 3, the response message received from the NW-B2 is sent to the call control unit(B) 39, first through the packet transmitting/receiving unit(B) 36 and then through the message control unit(B) 37. On receiving the response message, the call control unit (B) 39 extracts the call ID information from the response message. The call control unit (B) 39 recognizes the message as a response to the call that has been transmitted to the IP telephone 21 provided in the NW-B2 (a11, FIG. 4).

The call control unit(B) 39 transmits the IP address, media-receiving port number and codec data of the IP telephone 21, which are contained in the response message, to the media control unit(B) 38, together with the call ID information. Further, the call control unit (B) 39 transmits the response message to the common call control unit. 41, along with the call ID information.

The media control unit(B) 38 receives the information and saves the information as destination information in accordance with the call ID, in the field 51 of the media conversion table 5 shown in FIG. 3, which pertains to the direction of "VMD-proxy to NW-B" (a12, FIG. 4).

The common call control unit 41 receives the response message and generates, from this message, a response message to be sent to the NW-A1 (a13, FIG. 4). The unit 41 then transmits the response message to the call control unit (A) 34, together with the call ID information.

The call control unit. (A) 34 receives the call ID information and determines from the call ID information that a call transmitted has been responded. The unit 34 then incorporates, into a response message, the IP address, media-receiving port number and codec data of the interface controller (I/F A) 3a, which will be used in the media path connected to the NW-Al.. The unit 34 transfers this response message to the message control unit (A) 32. Further, it transmits the media information to the media control unit(A) 33, together with the call ID

The media control unit (A) 33 receives the information and registers the information, as destination information, in the field 50 of the media conversion table 5 shown in FIG. 3, which pertains to the direction of "NW-A to VMD-proxy" (a14, FIG. 4) . The message control unit (A) 32 receives the response message and transfers the response message to the NW-A1 through the packet transmitting/receiving unit(A) 31 (a15, FIG. 4).

The call control server 14 receives the response message and instructs the IP telephone 11 to transmit media to the VMD-proxy 3. The IP telephone 11 starts transmitting a media packet to the VMD-proxy 3 in accordance with the connection data informed from the call control server 14 (a16, FIG. 4). In the NW-B2 , the IP telephone 21 starts transmitting a media packet to the VMD-proxy 3 in accordance with the connection data from the call control server 24, in the same manner as in the NW-A1 (a17, FIG. 4).

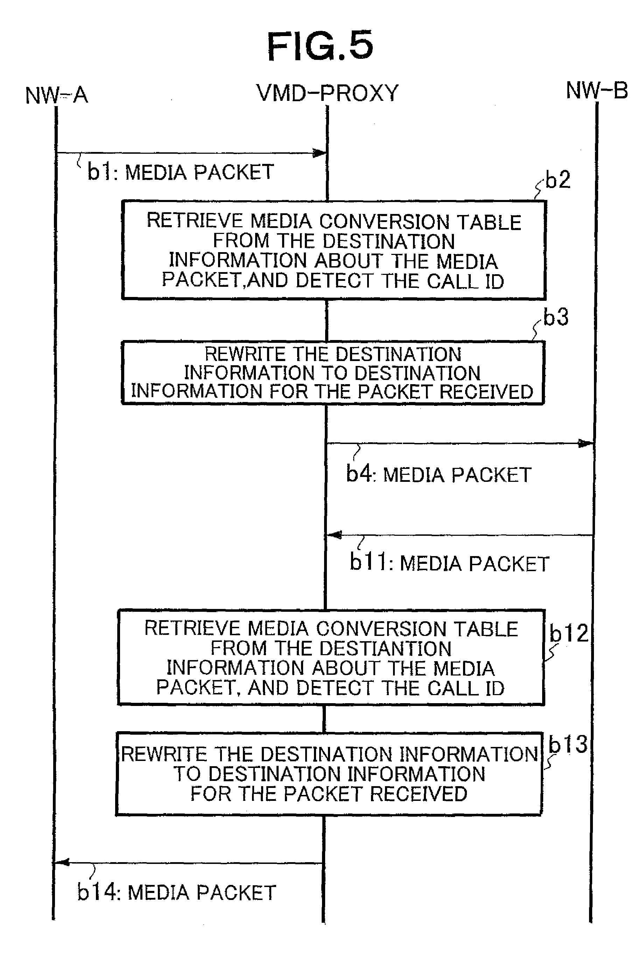

In the VMD-proxy 3, the packet transmitting/receiving unit (A) 31 receives the media packet from the IP telephone 11 via the NW-A1 The media packet is transferred to the media processing unit(A) 35 (b1, FIG. 5).

The media processing unit(A) 35 receives the media packet The unit 35 then retrieves the field 50 of the media conversion table 5, which pertains to the direction of "NW-A to VMD-proxy" If the field 50 contains table information, the call ID information is detected (b2, FIG. 5) The media processing unit(A) 35 uses the media conversion table 5, rewriting the destination information contained in the media packet to the destination information recorded in the field 51 that pertains to the direction of "VMD-proxy to NW-B" (b3, FIG. 5). At this time, an RTP header containing information, such as a sequence number and the like, is added to the media packet received

After rewriting the destination information, the media processing unit(A) 35 transfers the media packet to the packet transmitting/receiving unit(B) 36. The media packet is thus transmitted to the NW-B2 via the packet-transmitting/receiving unit(B) 36 (b4, FIG. 5).

In the same way as described above, the media-processing unit(B) 40 retrieves the field 52 of the media conversion table 5, which pertains to the direction of "NW-B to VMD-proxy", in accordance with the destination information (i.e., IP address and port number) contained in the packet received The destination information contained in the media packet received from the NW-B2 is rewritten to the destination information recorded in the field 53 of the media conversion table 5, which pertains to the direction of "VMD-proxy to NW-A" (b11 to b13, FIG. 5).

At this time, an RTP header containing information such as a sequence number is added to the media packet received, in the same manner as described above. The media packet, thus rewritten, is transmitted to the NW-A1 via the packet transmitting/receiving unit (A) 31 (b14, FIG. 5)

The media packet is repeatedly rewritten and transferred until the media control unit (A) 33 or the media control unit (B) 38 gives a stop instruction. The IP telephone 11 and the IP telephone 21 reproduce any media packet that they have received. Thus, VoIP communication can be accomplished through the VMD-proxy 3.

While the VoIP communication is undergoing between the IP telephone 11 and the IP telephone 21 through the VMD-proxy 3, the IP telephone 11 may start, transferring information to the IP telephone 12 How the VMD-proxy 3 operates in this case will be explained. When the transfer button provided on the IP telephone 11 is pushed, the call control server 14 determines that a call holding has been activated. The call control server 14 instructs the VMD-proxy 3 and IP telephone 11 to disconnect the media path and transmits a call-holding tone connection message to the VMD-proxy 3 (cl and c2, FIG.. 6)

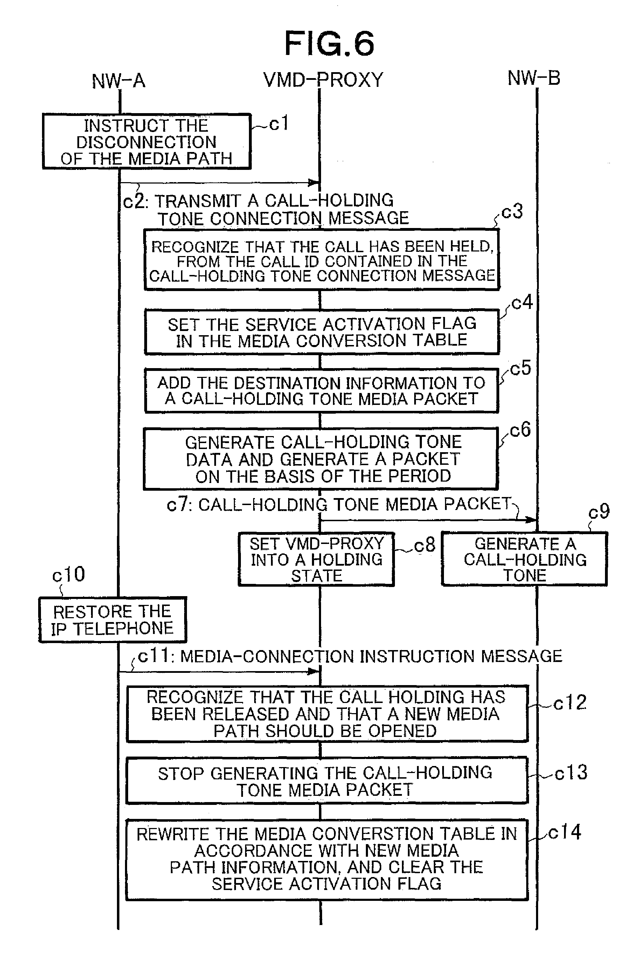

In the VMD-proxy 3, the call-holding tone connection message is sent to the call control unit (A) 34 through the packet transmitting/receiving unit (A) 31 and message control unit (A) 32. From the call ID contained in the call-holding tone connection message, the call control unit(A) 34 recognizes that the NW-A1 has held the call being communicated (c3, FIG. 6). The call control unit(A) 34 then transfers the call ID information and a call-holding connection instruction to the media control unit (A) 33.

The media control unit (A) 33 transfers the call ID and the instruction for generating a call-holding tone media packet to the service packet processing unit 42. At the same time, the media control unit (A) 33 sets the service activation flag 54 contained in the media conversion table 5 (c4, FIG. 6) From the destination information contained in the media packet received, the media processing unit (A) 35 determines that the service activation flag 54 has been set in the media conversion table 5. Then, the media processing unit (A) 35 discards the media packet it has received..

Upon receiving the call-holding connection instruction, the service packet processing unit 42 determines from the call ID information that the service-activation flag 54 is set in the media conversion table 5. The unit 42 adds the destination information about the field 51, which pertains to the direction of "VMD-proxy to NW-B", to a call-holding tone media packet (c5, FIG. 6) and then transmits this packet to the media processing unit(B) 40.

The service packet processing unit 42 generates call-tone data from the codec data and also a packet on the basis of the period (c6, FIG. 6) The media processing unit(B) 40 transmits the call-holding tone media packet to the NW-B2 through the packet transmitting/receiving unit(B) 36 (c7, FIG 6) In the NW-B2 , the IP telephone 21 reproduces the media packet received (i.e., call-holding tone media packet). The call-holding tone is thereby generated (c9, FIG. 6)

When the user of the IP telephone 11 dials the telephone number of the IP telephone 12, the call control server 14 calls the IP telephone 12. The IP telephone 12 makes a response. Communication between the IP telephone 11 and the IP telephone 12 is thereby achieved. Thus, the VMD-proxy 3 is set into a holding state (c8, FIG. 6).

The IP telephone 11 is restored (c10, FIG. 6). When the call control server 14 finishes transferring information, it transmits a media-connection instruction message so that the IP telephone 12 may change the destination of media to the VMD-proxy 3 and the VMD-pxoxy 3 may stop transmitting the call-holding tone and open a media path to the IP telephone 12 (c11, FIG. 6). Assume that the media-connection instruction message contains the IP address, media-receiving port number and codec data of the IP telephone 12.

In the VMD-pxoxy 3, the media-connection instruction message is transferred to the call control unit(A) 34 through the packet-transmitting/receiving unit(A) 31 and message control unit (A) 32. The call control unit (A) 34 recognizes that the call holding has been released and that a new media path should be opened (c12, FIG 6) Therefore, the unit (A) 34 transmits the media-connection instruction message to the media control unit (A) 33, together with the call ID.

The media control unit. (A) 33 demands that the service packet processing unit 42 should stop generating the call-holding tone media packet (c13, FIG. 6) The media control unit(A) 33 rewrites the destination information in the field 53 of the media conversion table 5, which pertains to the direction of "VMD-proxy to NW-A," to the information about the IP telephone 12, in accordance with the new media path information received. Then, the unit(A) 33 clears the service activation flag 54 (c14, FIG. 6).

Thereafter, the media processing unit(A) 35 and media processing unit (B) 40 refer to the media conversion table 5 that has been changed. Thus, the packet received from the NW-B2 is transmitted to the IP telephone 12 in accordance with the destination information recorded in the field 53 that pertains to the direction of "VMD-proxy to NW-A", and the media packet received from the IP telephone 12 is transmitted by using the field 51 that pertains to the direction of "VMD-proxy to NW-B".

In the present embodiment, VoIP communication can be accomplished between the IP telephone 12, VMD-proxy 3 and IP telephone 21 every time the information is rewritten and transferred as described above.

How call holding and call transfer are performed in the present embodiment has been described. Other kinds of additional VoIP services (e.g., talk between three telephones, pickup service, and the like) can be provided in this embodiment. The data processing to provide these services can be carried out in only the network in which these services are activated. Hence, the network that receives these services remains in one-to-one talk state with respect to the VMD-proxy 3, and can receive these additional services. Thus, the user can activate any additional service in his or her device, without necessity of considering the additional service-providing ability of the device to which his or her device should be connected.

The embodiment can provide call holding and call transfer and other additional VoIP services, even to devices that cannot provide additional VoIP services, on the basis of the network specification and service-providing procedure of the device in which the additional VoIP services are activated.

The present embodiment does not depend on the functions of the network to which a VoIP device is connected, or on the function of the VoIP device.. It is therefore easy to add new services that can be provided in the network. Neither the network nor the VoIP device needs to perform a procedure of providing the new services. Only the VMD-proxy 3 provided between the networks or VoIP devices needs to perform the procedure of providing the new services. The new additional services can therefore be provided at high speed and low cost.

In the present embodiment, the VMD-proxy 3 is provided between the network (A) 1 that can provide additional VoIP services and the network (B) 2 that cannot provide additional VoIP services. Nonetheless, the VMD-proxy 3 may be provided outside or inside the netwark(A) 1 if the network (A) 1 incorporates devices that can provide additional VoIP services and devices that cannot provide additional VoIP services.

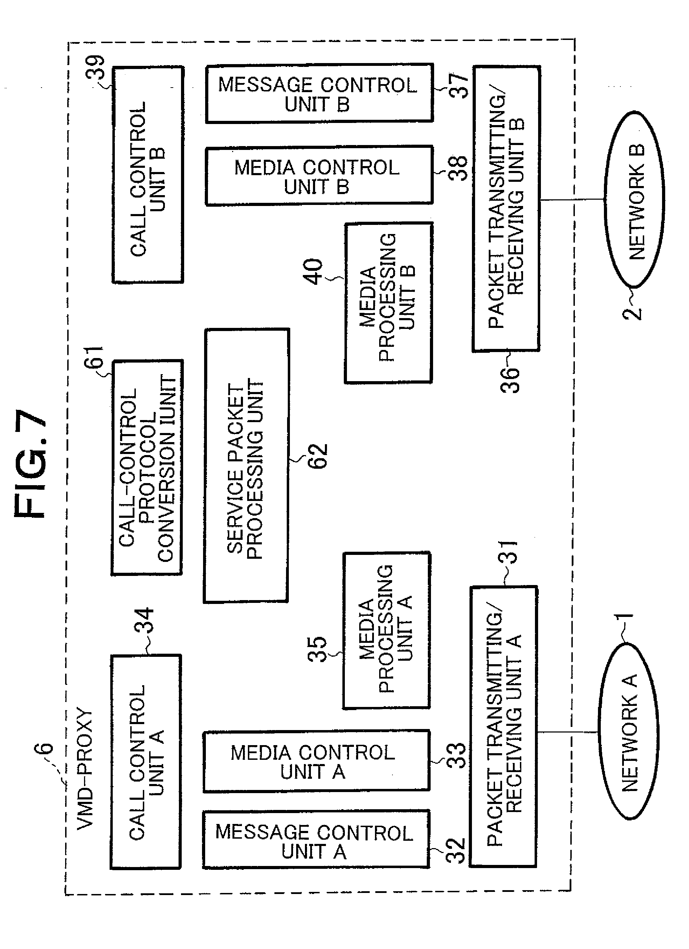

FIG 7 is a block diagram depicting the configuration of the VMD-proxy provided in another embodiment of the present invention. As seen from FIG 7, this VMD-proxy 6 is identical in configuration to the VMD-proxy 3 shown in FIG. 2, except that a call-control protocol conversion unit 61 and a service packet processing unit 62 are provided in place of the common call control unit 41 and service packet processing unit 42.. The components identical to those of the VMD-proxy 3 are designated at the same reference numerals.

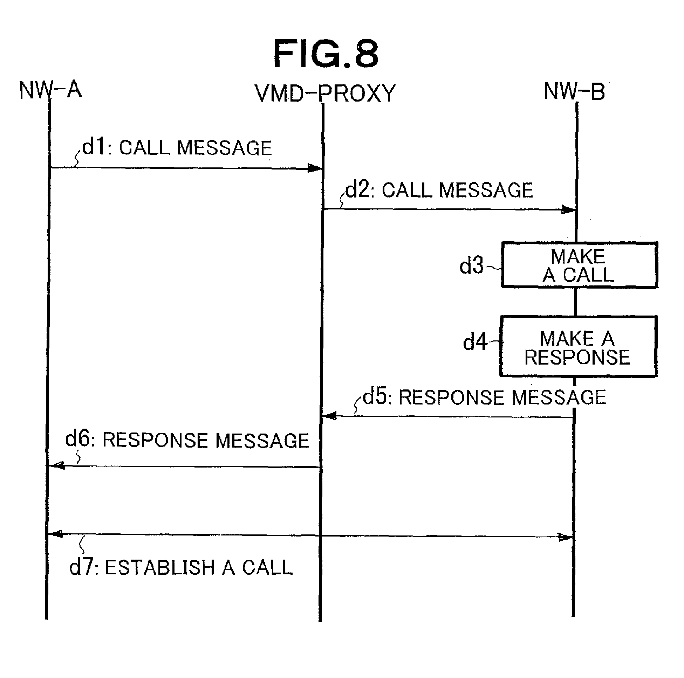

The other embodiment of the invention has a system configuration that is similar to that of the VoIP network of the embodiment illustrated in FIG. 1. Nevertheless, it is totally different in the call control protocol in the network (A) 1 and network (B) 2, and in the network address system FIGS 8 to 10 are sequence charts explaining the operation in the VoIP network according to the other embodiment of the invention. With reference to FIGS. 1 and 7 to 10, it will be explained how the VoIP network according to the other embodiment operates. Note that the VDM-proxy 6 uses the media conversion table 5 shown in FIG. 3. In the following explanation, the network(A) 1 will be referred to as NW-A1, and the network (B) 2 as NW-B2.

When the user of the IP telephone 11 dials the phone number of the IP telephone 21, the call control server 14 analyzes the received number from a database (not shown) and transmits a call message to the VMD-proxy 6 (d1, FIG.. 8).

On receiving the call message, the VMD-proxy 6 transmits the call message to the call control server 24 of the NW-B2 (d2, FIG. 8) The call control server 24 makes a call to the IP telephone 21 (d3, FIG. 8).

When the IP telephone 21 makes a response (d4, FIG.. 8), the call control server 24 sends a response message to the VMD-proxy 6 (d5, FIG.. 8). The VMD-proxy 6 transmits the response message to the call control server 14 of the NW-A1 (d6, FIG 8).

The call control server 14 informs the IP telephone 11 that the IP telephone 21 has responded. Thus, a mutual call is established between the IP telephone 11 and the IP telephone 21 (d7, FIG. 8)

How the VMD-proxy 6 operates will be described, with reference to FIGs. 1, 3, 7, 9 and 10.

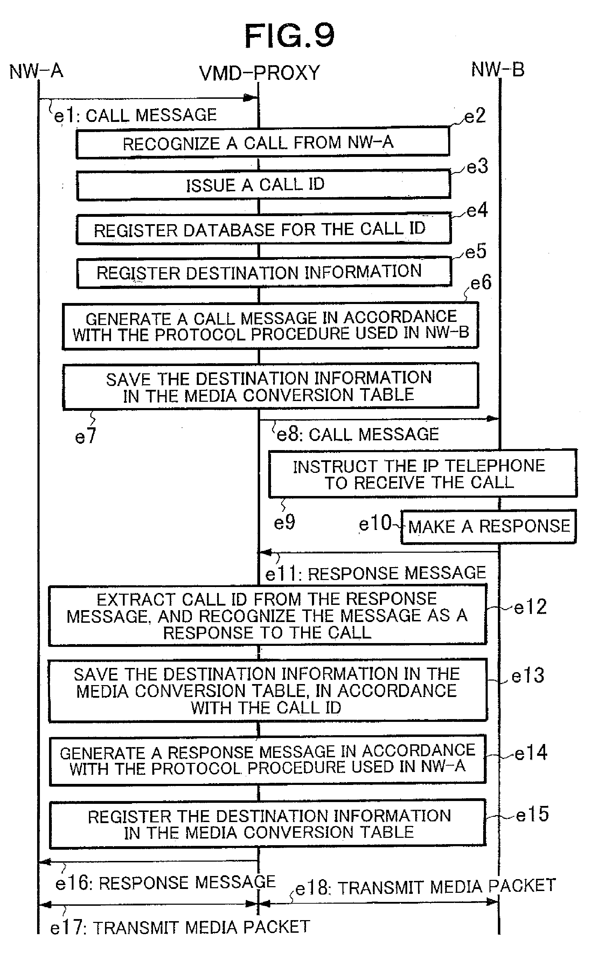

A call message is transmitted from the NW-A1 to the VMD-proxy 6 (e1, FIG. 9) In the VMD-proxy 6, the packet transmitting/receiving unit (A) 31 receives the call message, which is sent to the message control unit (A) 32.

The message control unit(A) 32 sends the call message to the call control unit(A) 34. The call control unit(A) 34 recognizes that the VMD-proxy 6 has received a call from the NM-A1 (e2, FIG. 9) .. The call control unit (A) 34 issues a call ID (e3, FIG. 9) Thereafter, the call ID controls and manages the call connection.

The call message received contains the media information (i.e., IP address, media-receiving port number and codec data) about the IP telephone 11 to which the call should be transmitted. The call control unit(A) 34 transfers the information about the IP telephone 11 to the media control unit(A) 33, together with the call ID information.

In the media control unit (A) 33, a database for the call ID is registered in a media conversion table 5 shown in FIG. 3 (e4, FIG. 9) The media conversion table 5 consists of four fields 50 to 53.. The field 50 pertains to the direction of "NW-A to VMD-proxy", the field 51 to the direction of "VMD-proxy to NW-B," the field 52 to the direction of "NW-B to VMD-proxy", and the field 53 to the direction of "VMD-proxy to NW-A."

Each of the fields 50 to 53 contains the IP address, media-receiving port number and codec data of the destination The field also contains parameters, which may be used to retrieve the call ID.

The media control unit (A) 33 receives the media information about the IP telephone 11 and registers this information as destination information in the field 53 of the media conversion table 5, which pertains to the direction of "VMD-proxy to NW-A" (e5, FIG. 9).

The call control unit (A) 34 transfers the call message to the call-control protocol conversion unit 61, together with the call ID information. The call-control protocol conversion unit 61 generates a call message in accordance with the protocol procedure used in the NW-B2 (e6, FIG.. 9). The call message thus generated is transferred to the call control unit (B) 39, together with the call ID information.

The call control unit (B) 39 recognizes that the call should be sent to the NW-B2. The call control unit(B) 39 incorporates the information about the VMD-proxy 6 into the call message and transfers the call message to the message control unit (B) 37 . The call control unit (B) 39 transfers the media information about the VMD-proxy 6, which will be used in the media path set in the call message, to the media control unit(B) 38, along with the call ID.. In this case, the call ID is identical to the call ID issued at the call control unit (A) 34.. Here, the VDM-proxy information may be the IP address, media-receiving port number and codec data of the interface controller (I/F B) 3b.

The media control unit(B) 38 receives the media path information and saves this information, as destination information, in t.he field 52 of the media conversion table 5, which pertains to the direction of "NW-B to VMD-proxy" (e7, FIG. 9). The message control unit(B) 37 receives the call messages and transmits this message to the NW-B2 through the packet transmitting/receiving unit(B) 36 (e8, FIG.. 9)

In the NW-B2, the call control server 24 instructs the IP telephone 21 to receive the call (e9, FIG. 9). So instructed, the IP telephone 21 recognizes that a call from the VMD-proxy 6 has arrived and then makes a response (e10, FIG. 9). Then, the IP telephone 21 sends a response message to the VMD-proxy 6 via the call control server 24 (e11, FIG. 9). The response message contains the IP address, media-receiving port number and codec data of the IP telephone 21.

In the VMD-proxy 6, the response message received from the NW-B2 is sent to the call control unit(B) 39, first through the packet transmitting/receiving unit(B) 36 and then through the message control unit (B) 37. On receiving the response message, the call control unit(B) 39 extracts the call ID information from the response message. The call control unit (B) 39 recognizes the message as a response to the call that has been transmitted to the IP telephone 21 provided in the NW-B2 (e12, FIG. 9).

The call control unit(B) 39 transmits the IP address, media-receiving port number and codec data of the IP telephone 21, which are contained in the response message, to the media control unit(B) 38, together with the call ID information Further, the call control unit(B) 39 transmits the response message to the common call control unit 41, along with the call ID information.

The media control unit (B) 38 receives the information saves the information as destination information in accordance with the call ID, in the field 51 of the media conversion table 5 (FIG. 3), which pertains to the direction of "VMD-proxy to NW-B" (e13, FIG. 9).

The call-control protocol conversion unit 61 receives the response message and generates, from this message, a response message that accords with the protocol procedure used in the network A (e14, FIG. 9). The unit 61 then transmits the response message to the call control unit(A) 34, together with the call ID information.

The call control unit (A) 34 receives the call ID information and determines from the call ID information that the call transmitted has been responded. The unit 34 then incorporates, into a response message, the IP address, media-receiving port number and codec data of the interface controller (I/FA) 3a, which will be used in the media path connected to the NW-A1. The unit 34 transfers this response message to the message control unit (A) 32. Further, it transmits the media information to the media control unit(A) 33, together with the call ID.

The media control unit(A) 33 receives the information and registers the information, as destination information, in the field 50 of the media conversion table 5, which pertains to the direction of "NW-A to VMD-proxy" (e15, FIG. 9) The message control unit(A) 32 receives the response message and transfers the response message to the NW-A1 through the packet transmitting/receiving unit (A) 31 (e16, FIG. 9)

The call control server 14 receives the response message and instructs the IP telephone 11 to transmit media to the VMD-proxy 6. The IP telephone 11 starts transmitting a media packet to the VMD-proxy 6 in accordance with the connection data informed from the call control server 14 (e17, FIG. 9) In the NW-B2, the IP telephone 21 starts transmitting a media packet to the VMD-proxy 6 in accordance with the connection data from the call control server 24, in the same manner as in the NW-A1(e18, FIG. 9).

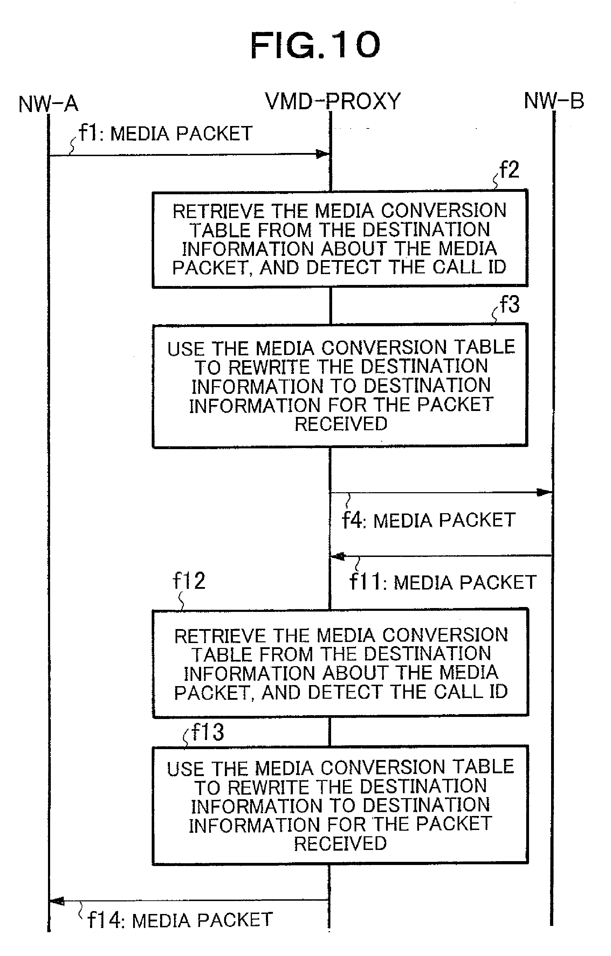

In the VMD-proxy 6, the packet-transmitting/receiving unit (A) 31 receives the media packet from the IP telephone 11 via the NW-A1 (f1, FIG. 10) The media packet is transferred to the media processing unit(A) 35. The media processing unit(A) 35 receives the media packet. The unit 35 then retrieves the field 50 of the media conversion table 5, which pertains to the direction of "NW-A to VMD-proxy", in accordance with the destination information (i,e., IP address and port number.) If the field 50 contains table information, the call ID information is detected (f2, FIG . 10)

The media processing unit (A) 35 uses the media conversion table 5, rewriting the destination information contained in the received packet to the destination information recorded in the field 51 that pertains to the direction of "VMD-proxy to NW-B" (f3, FIG. 10) . At this time, an RTP header containing information, such as a sequence number and the like, is added to the media packet received

After rewriting the destination information, the media processing unit(A) 35 transfers the media packet to the packet transmitting/receiving unit (B) 36. The media packet is thus transmitted to the NW-B2 via the packet transmitting/receiving unit(B) 36 (f4, FIG. 10)

In the same way as described above, the packet transmitting/receiving unit(B) 36 retrieves the field 52 of the media conversion table 5, which pertains to the direction of "NW-B to VMD-proxy," in accordance with the destination information (i.e., IP address and port number) contained in the packet received from the NW-B2. The destination information contained in the received media packet is rewritten to the destination information recorded in the field 53 of the media conversion table 5, which pertains to the direction of "VMD-proxy to NW-A", in accordance with the call ID information detected (f11 to f13, FIG.. 10).

In this case, too, an RTP header containing information such as a sequence number is added to the media packet received, in the same manner as described above. The media packet, thus rewritten, is transmitted to the NW-A1 via the packet transmitting/receiving unit(A) 31. The media packet is repeatedly rewritten and transferred until the media control unit(A) 33 or the media control unit(B) 38 gives a stop instruction.

The IP telephone 11 and the IP telephone 21 reproduce any media packet that they have received.. Thus, VoIP communication can be accomplished through the VMD-proxy 6.

How the protocol is converted in the VMD-proxy 6 has been described. Call holding, call transfer and other kinds of additional VoIP services (e.g., talk between three telephones, pickup service, and the like) can be provided in this embodiment. The data processing to provide these services can be carried out in only the network in which these services are activated. Hence, the network that receives these services remains in one-to-one talk state with respect to the VMD-pxoxy 6, and can receive these additional services. Thus, any addition service can be activated in a device, regardless of the service-providing ability of the device that is to receive the additional service.

This embodiment does not depend on the functions of the network to which a VoIP device is connected, or on the function of the VoIP device. It is therefore easy to add new services that can be provided in the network.. Neither the network nor the VoIP device needs to perform a procedure of providing the new services. Only the VMD-proxy 6 provided between the networks or VoIP devices needs to perform the procedure of providing the new services. The new additional services can therefore be provided at high speed and low cost.

In the present embodiment, the VMD-proxy 6 is provided between the network (A) 1 that can provide additional VoIP services and the network (B) 2 that cannot provide additional VoIP services. Nonetheless, the VMD-proxy 6 may be provided outside or inside the network (A) 1 if the network(A) 1 incorporates devices that can provide additional VoIP services and devices that cannot provide additional VoIP services.

## Claims

1. A VoIP network comprising:
a plurality of VoIP devices including a first. VoIP device that can provide an additional service using VoIP communication and a second VoIP device that cannot provide the additional service; and
a media proxy server connected to said plurality of VoIP devices, said media proxy server being configured to, when the additional service is activated in said first VoIP device, generate a service media packet corresponding to the additional service, and to transmit the service media packet to said second VoIP device that uses the additional service

2. The VoIP network according to claim 1, wherein said media proxy server is provided on a path for transmitting the service media packet.

3. The VoIP network according to claim 1, wherein said media proxy server sets media paths to said plurality of VoIP devices, respectively.

4. The VoIP network according to claim 3, further comprising a media conversion table for managing information representing destinations to which the media paths should be connected, wherein said media proxy server uses said media conversion table to transfer media packets each containing the service media packet.

5. The VoIP network according to one of claims 1 to 4, wherein said media proxy server comprises means for converting a protocol that performs call control between said plurality of VoIP devices..

6. The VoIP network according to one of claims 1 to 5, wherein said additional service includes at least call holding and call transfer of the VoIP communication,

7. A media proxy server for use in a VoIP network comprising a plurality of VoIP devices including a first VoIP device that can provide an additional service using VoIP communication and a second VoIP device that cannot provide the additional service, said media proxy server comprising:
means for generating, when the additional service is activated in said first VoIP device, a service media packet corresponding to the additional service; and
means for transmitting the service media packet to said second VoIP device that uses the additional service.

8. The media proxy server according to claim 7, which is provided on a path for transmitting the service media packet.

9. The media proxy server according to claim 7, which sets media paths to the VoIP devices, respectively.

10. The media proxy server according to claim 9, which uses a media conversion table for managing information representing destinations to which the media paths should be connected, thereby to transfer media packets each containing the service media packet.

11. The media proxy server according to one of claims 7 to 10, further comprising means for converting a protocol that performs call control between the VoIP devices.

12. The media proxy server according to one of claims 7 to 11, wherein said additional service includes at least call holding and call transfer of the VoIP communication.

13. A method of providing additional services for use in a VoIP network comprising a plurality of VoIP devices and a media proxy server connected to said plurality of VoIP devices, said plurality of VoIP devices including a first VoIP device that can provide an additional service using VoIP communication and a second VoIP device that cannot provide the additional service, said method comprising:
a step in which said media proxy server generates, when an additional service is activated in a VoIP device , a service media packet corresponding to the additional service; and
a step in which said media proxy server transmits the service media packet to said second VoIP device that uses the additional service.

14. The method according to claim 13, wherein said media proxy server is provided on a path for transmitting the service media packet.

15. The method according to claim 13, wherein said media proxy server sets media paths to said plurality of VoIP devices, respectively.

16. The method according to claim 15, wherein said media proxy server uses a media conversion table for managing information representing destinations to which the media paths should be connected, thereby to transfer media packets each containing the service media packet.

17. The method according to one of claims 13 to 16, further comprising a step in which said media proxy server converts a protocol that performs call control among said plurality of VoIP devices.

18. The method according to one of claims 13 to 17, wherein said additional service includes at least call holding and call transfer of the VoIP communication.
